(19) **Europäisches Patentamt / European Patent Office / Office européen des brevets**

(11) **EP 1 744 914 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(21) Anmeldenummer: **05716680.3**

(22) Anmeldetag: **14.02.2005**

(51) Int Cl.:
***B60G 17/052*** (2006.01)

(86) Internationale Anmeldenummer:
**PCT/EP2005/050628**

(87) Internationale Veröffentlichungsnummer:
**WO 2005/105492 (10.11.2005 Gazette 2005/45)**

(54) **GESCHLOSSENE NIVEAUREGELANLAGE FÜR EIN KRAFTFAHRZEUG**

INSTALLATION FOR CONTROLLING CLOSED LEVEL FOR A MOTOR VEHICLE

INSTALLATION DE REGULATION DE NIVEAU FERMEE DESTINEE A UN VEHICULE AUTOMOBILE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **29.04.2004 DE 102004021170**

(43) Veröffentlichungstag der Anmeldung:
**24.01.2007 Patentblatt 2007/04**

(73) Patentinhaber: **Continental Teves AG & Co. oHG 60488 Frankfurt (DE)**

(72) Erfinder: **STILLER, Alexander 30823 Garbsen (DE)**

(56) Entgegenhaltungen:
**EP-A- 0 945 288      DE-C1- 10 122 567**
**US-A1- 2001 005 803      US-A1- 2003 107 191**

**Beschreibung**

Die Erfindung betrifft eine geschlossene Niveauregelanlage für ein Kraftfahrzeug, mit der das aktuelle Niveau des Kraftfahrzeuges angehoben und abgesenkt werden kann und die die folgenden Bestandteile enthält:

- einen Kompressor
- einen Druckluftspeicher, der mit Luft aus der Atmosphäre befüllbar und der in die Atmosphäre entleerbar ist
- mindestens eine Luftfeder, wobei die Luftfeder über den Kompressor mit dem Druckluftspeicher derart in Verbindung steht, dass Druckluft aus der Luftfeder in den Druckluftspeicher und in die umgekehrte Richtung überführbar ist

Eine derartige geschlossene Niveauregelanlage ist beispielsweise aus der DE 101 22 567 C1 bekannt. Bei der aus dieser Druckschrift bekannten Niveauregelanlage wird der Speicherdruck des Druckluftspeichers indirekt über die Bestimmung der Luftmenge in der Niveauregelanlage geregelt, indem der Druckluftspeicher mit Luft aus der Atmosphäre aufgefüllt wird, wenn die Luftmenge in der Niveauregelanlage unterhalb einer unteren Grenze liegt, und der Druckluftspeicher in die Atmosphäre entleert wird, wenn die Luftmenge innerhalb der Niveauregelanlage oberhalb einer oberen Grenze liegt. Hierbei wird die Regelung derart vorgenommen, dass die Luftmenge in der Niveauregelanlage nach dem Auffüllen oder Entleeren in einem Arbeitsbereich zwischen der unteren und der oberen Grenze liegt. Durch das Verfahren ist also sichergestellt, dass die Luftmenge in der Niveauregelanlage immer in einem bestimmten Arbeitsbereich gehalten wird und infolgedessen der Speicherdruck in einem bestimmten Zustand des Kraftfahrzeuges auch immer in einem bestimmten Bereich liegt. Der Arbeitsbereich für die Luftmenge wird hierbei so gewählt, dass in einem bestimmten Normalzustand des Kraftfahrzeuges der Speicherdruck in einem Bereich liegt, in dem einerseits ein schnelles Anheben und andererseits ein schnelles Absenken des Kraftfahrzeuges möglich ist. Der Speicherdruck braucht durch Befüllen oder Entleeren des Druckluftspeichers nur noch dann angeglichen werden, wenn sich aufgrund von Leckage bzw. großen Temperaturschwankungen ergeben hat, dass die Luftmenge in der Niveauregelanlage außerhalb des Arbeitsbereiches (und infolgedessen der Speicherdruck außerhalb des gewünschten Bereiches) liegt. Der Kompressor der Niveauregelanlage wird zum Auffüllen des Druckluftspeichers also nur selten betätigt, so dass sich die Kompressorlaufzeiten verkürzen und sich die Kompressorlebensdauer verlängert. Es ist jedoch festzustellen, dass ein Befüllen oder Entleeren des Druckluftspeichers der Niveauregelanlage auch dann vorgenommen wird, wenn die Luftmenge in der Niveauregelanlage außerhalb des Arbeitsbereiches liegt, obwohl auch in diesem Fall mit Hilfe der Niveauregelanlage noch viele angeforderte Niveauänderungen des Kraftfahrzeuges vorgenommen werden könnten. Dieser Fall kann z. B. auftreten, wenn das Kraftfahrzeug in einer warmen Garage geparkt wurde und hinterher in einer kalten Umgebung gefahren wird. Es kommt dann aufgrund des Temperaturabfalls zu einer Reduzierung der Luftmenge in der Niveauregelanlage und infolgedessen zu einem Befüllen des Druckluftspeichers, wenn die Luftmenge außerhalb des Arbeitsbereiches liegt. Die Befüllung wird vorgenommen, obwohl mit der Niveauregelanlage noch viele angeforderte Regelvorgänge möglich wären.

Aus der EP 0 945 288 A2 ist ebenfalls eine geschlossene Niveauregelanlage gemäß dem Oberbegriff des Anspruchs 1 bekannt. Dem Druckluftspeicher ist ein Speicherdrucksensor zugeordnet, der den Luftdruck des Druckluftspeichers detektiert und einen damit korrelierenden Signalwert generiert. Die Steuereinheit der aus der genannten Druckschrift bekannten Niveauregelanlage bearbeitet die Signalwerte des Speicherdrucksensors und veranlasst eine Druckbeaufschlagung des Druckluftspeichers, wenn der Signalwert des Speicherdrucksensors einen vorbestimmten unteren Schwellsignalwert erreicht. Die Druckbeaufschlagung des Druckluftspeichers wird beendet, wenn der Signalwert des Speicherdrucksensors einen vorbestimmten oberen Schwellsignalwert erreicht. Der obere Schwellsignalwert wird in Abhängigkeit von dem Luftdruck in der Umgebung des Fahrzeuges variiert.

Es ist festzustellen, dass ein Befüllen des Druckluftspeichers der Niveauregelanlage immer dann vorgenommen wird, wenn der Luftdruck im Druckluftspeicher unterhalb des unteren Schwellsignalwertes liegt. Auch in diesem Fall ist es jedoch möglich, dass mit Hilfe der Niveauregelanlage noch viele angeforderte Niveauänderungen des Kraftfahrzeuges vorgenommen werden könnten.

Der Erfindung liegt die Aufgabe zugrunde, eine geschlossene Niveauregelanlage für ein Kraftfahrzeug zu schaffen, in der der Speicherdruck durch Befüllen oder Entleeren möglichst selten nachgeregelt werden muss.

Gemäß den kennzeichnenden Merkmalen des Anspruchs 1 wird die Aufgabe dadurch gelöst, dass der Speicherdruck wie folgt geregelt wird:

- Bestimmung des aktuellen Speicherdruckes
- Vorgabe mindestens eines Niveaus, auf das das Kraftfahrzeug angehoben oder abgesenkt werden kann
- Bestimmung der Luftmenge, die benötigt wird, um das Kraftfahrzeug aus dem aktuellen Niveau in das vorgegebene Niveau anzuheben oder abzusenken
- Bestimmung des späteren Speicherdruckes, um den der aktuelle Speicherdruck absinken würde, wenn das Kraftfahrzeug aus dem aktuellen Niveau in das vorgegebene Niveau angehoben würde, bzw. Bestimmung des späteren Speicherdruckes, um den der aktuelle Speicherdruck ansteigen würde, wenn das Kraftfahrzeug aus dem aktuellen Niveau in das vorgegebene Niveau abgesenkt würde

- Auffüllen des Druckluftspeichers mit Druckluft, wenn der spätere Speicherdruck unter einem unteren Grenzwert liegen würde und Entleeren des Druckluftspeichers, wenn der spätere Speicherdruck über einem oberen Grenzwert liegen würde.

Erst nach einem Auffüllen des Druckluftspeichers bzw. nach einem Entleeren des Druckluftspeichers bei Vorliegen der jeweils genannten Bedingung wird der eigentliche Regelvorgang zur Anhebung oder Absenkung des Fahrzeugaufbaus des Kraftfahrzeuges vorgenommen. Es wird ggfs. so viel Druckluft in den Druckluftspeicher aufgefüllt bzw. aus diesem abgelassen, dass nach dem Auffüllen oder Ablassen der Speicherdruck dem unteren bzw. dem oberen Grenzwert entspricht oder zwischen den Grenzwerten liegt.

Der mit der Erfindung erzielte Vorteil ist insbesondere darin zu sehen, dass ein Befüllen oder Entleeren des Druckluftspeichers nicht automatisch und unabhängig von einem Regelvorgang erfolgt, wenn der aktuelle Speicherdruck außerhalb eines bestimmten Bereiches liegt. Vielmehr wird ein Befüllen oder Entleeren des Druckluftspeichers und damit die Veränderung des aktuellen Speicherdruckes im Druckluftspeicher ausschließlich dann vorgenommen, wenn der spätere Speicherdruck (also der Speicherdruck nach Abschluss einer Regelung) unter einem unteren Grenzwert oder über einem oberen Grenzwert liegen würde. Durch dieses Vorgehen wird also der Vorteil erreicht, dass die Anzahl der Fälle, in denen der Speicherdruck des Druckluftspeichers angepasst wird, sehr gering ist. Somit braucht der Kompressor zum Auffüllen des Druckluftspeichers (wenn der Speicherdruck also nach ober angepasst werden soll) nur selten betätigt zu werden. Daher lassen sich die Kompressorlaufzeiten gegenüber den Kompressorlaufzeiten der aus der DE 10122 567 C1 bekannten geschlossenen Niveauregelanlage nochmals verkürzen und sich die Kompressorlebensdauer dementsprechend nochmals verlängern.

Gemäß einer Weiterbildung der Erfindung nach Anspruch 2 wird zur Regelung des Speicherdruckes ein Niveau vorgegeben, auf das das Kraftfahrzeug nach der Vorgabe, ausgehend vom aktuellen Niveau, tatsächlich angehoben oder abgesenkt werden soll. Der Vorteil dieser Weiterbildung ist darin zu sehen, dass eine Anpassung des Speicherdruckes durch Befüllen oder Entleeren des Druckluftspeichers nur dann notwendig ist, wenn der spätere Speicherdruck (also der Speicherdruck nach dem Regelvorgang) außerhalb eines bestimmten Bereiches liegen würde. Werden also über einen langen Zeitraum in dem Kraftfahrzeug keine Niveauänderungen oder nur geringe Niveauänderungen aus dem aktuellen Niveau angefordert, so wird der Speicherdruck über einen entsprechend langen Zeitraum überhaupt nicht angepasst, obwohl der Speicherdruck evtl. sehr niedrig (z. B. aufgrund einer niedrigen Umgebungstemperatur) oder sehr hoch (z. B. infolge einer hohen Umgebungstemperatur) ist.

Gemäß einer Weiterbildung der Erfindung nach Anspruch 3 wird zur Regelung des Speicherdruckes mindestens ein fiktives Niveau vorgegeben, auf das das Kraftfahrzeug ausgehend vom aktuellen Niveau theoretisch angehoben oder abgesenkt werden kann. Der Vorteil dieser Weiterbildung ist darin zu sehen, dass das fiktive Niveau vom Kraftfahrzeughersteller individuell vorgegeben werden kann.

Gemäß einer Weiterbildung nach Anspruch 4 wird die Luftmenge, die notwendig ist, um das Kraftfahrzeug auf das fiktive Niveau anzuheben oder abzusenken, bei eingeschalteter Zündung in bestimmten zeitlicher Abständen berechnet. Mit Hilfe der berechneten Luftmenge wird dann überprüft, ob der spätere Speicherdruck innerhalb des gewünschten Bereiches liegen würde. Falls dies nicht der Fall ist, wird der Druckluftspeicher befüllt oder entleert, um dies zu gewährleisten. Der Vorteil dieser Weiterbildung ist darin zu sehen, dass in kurzen zeitlichen Abständen sichergestellt wird, dass mit Hilfe der Niveauregelanlage ein Anheben oder Absenken des Kraftfahrzeuges in das vorgegebene fiktive Niveau möglich wäre.

Gemäß einer Weiterbildung der Erfindung nach Anspruch 5 wird als fiktives Niveau mindestens ein Niveau vorgegeben, in dem sich das Kraftfahrzeug in einem fahrdynamisch sicheren Zustand befindet. Der Vorteil dieser Weiterbildung ist darin zu sehen, dass jederzeit sichergestellt ist, dass das Kraftfahrzeug mit Hilfe der Niveauregelanlage in ein fahrdynamisch sicheres Niveau angehoben oder abgesenkt werden kann.

Eine Weiterbildung nach Anspruch 6 ist dadurch gekennzeichnet, dass, wenn der spätere Speicherdruck unter dem unteren Grenzwert liegen würde, vor einem Regelvorgang mindestens soviel Druckluft in den Druckluftspeicher gefüllt wird, dass der Speicherdruck nach dem Regelvorgang zumindest dem unteren Grenzwert entspricht, bzw., wenn der spätere Speicherdruck über dem oberen Grenzwert liegen würde, mindestens soviel Druckluft aus dem Druckluftspeicher abgelassen wird, dass der Speicherdruck nach dem Regelvorgang zumindest dem oberen Grenzwert entspricht. Der Vorteil dieser Weiterbildung ist darin zu sehen, dass genau soviel Druckluft in den Druckluftspeicher überführt bzw. aus diesem abgelassen wird, wie es zur Einhaltung der Grenzwerte notwendig ist. Somit kommt es beim Befüllen des Druckluftspeichers nur zu kurzen Kompressorlaufzeiten. Darüber hinaus ist sichergestellt, dass der Vorgang des Befüllens bzw. des Entleerens (der vor dem eigentlichen Regelvorgang mit Hilfe der Niveauregelanlage stattfindet) den kürzest möglichen Zeitraum beansprucht, so dass die eigentliche Regelung nicht unnötig verzögert wird.

Gemäß einer Weiterbildung der Erfindung nach Anspruch 7 wird der obere und der untere Grenzwert anhand des maximal zulässigen Kompressorstromes bestimmt. Der Vorteil der Weiterbildung ist darin zu sehen, dass der Kompressor bei Einhaltung der Grenzwerte nicht durch einen zu hohen Kompressorstrom beschädigt werden kann.

Gemäß einer Weiterbildung der Erfindung nach Anspruch 8 wird der obere Grenzwert anhand der gewünschten maximalen Verstellgeschwindigkeit und der untere Grenzwert anhand der gewünschten minimalen Verstellgeschwindigkeit der Niveauanlagen bestimmt. Der Vorteil dieser Weiterbildung ist darin zu sehen, dass bei Einhaltung der Grenzwerte auch die gewünschten Verstellgeschwindigkeiten eingehalten werden.

Ein Vorteil und weitere Ausführungsbeispiele der Erfindung werden im Zusammenhang mit den nachstehenden Figuren erläutert, darin zeigt:

Figur 1: eine Niveauregelanlage in schematischer Darstellung

Figur 2: ein Diagramm

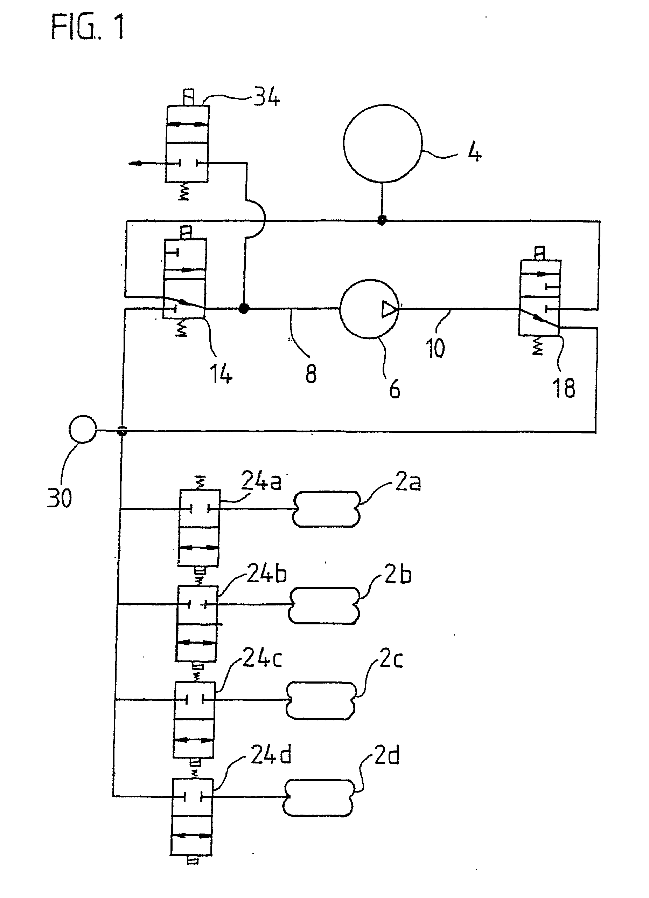

Figur 1 zeigt eine geschlossene Niveauregelanlage in schematischer Darstellung (ausführliche Ausführungen zu dem Aufbau und der Funktionsweise dieser Niveauregelanlage sind in der DE 199 59 556 C2 zu finden). Die Niveauregelanlage weist Luftfedern 2a bis 2d und einen Druckluftspeicher 4 auf Ferner enthält die Niveauregelanlage einen Kompressor 6, der zumindest Druckluft von seinem Eingang 8 zu seinem Ausgang 10 befördern kann. Die genannten Bestandteile sind über Druckluftleitungen miteinander verbunden, in denen steuerbare Wegeventile 14, 18 und 24a - 24d liegen. Im Folgenden wird anhand der Luftfeder 2a erläutert, wie Druckluft von dem Druckluftspeicher 4 über den Kompressor 6 in die Luftfedern 2a bis 2d überführt werden kann. Zunächst wird von der (nicht gezeigten) Steuereinheit der Niveauregelanlage das steuerbare Wegeventil 24a angesteuert, so dass dieses von dem in der Figur 1 gezeigten ersten Schaltzustand in den zweiten Schaltzustand übergeht. Danach wird von der Steuereinheit der Kompressor 6 angesteuert, so dass dieser beginnt zu laufen. Aus dem Druckluftspeicher 4 wird dann über das steuerbare Wegeventil 14, den Kompressor 6, das steuerbare Wegeventil 18 und das steuerbare Wegeventil 24a Druckluft in die Luftfeder 2a überführt. Ist genügend Druckluft in die Luftfeder 2a überführt worden (hat der Fahrzeugaufbau im Bereich der Luftfeder 2a also das gewünschte Niveau eingenommen), wird von der Steuereinheit wiederum der Kompressor 6 angesteuert, so dass dieser aufhört zu laufen, und darüber hinaus das steuerbare Wegeventil 24a nicht mehr bestromt, so dass er wieder in den ersten Schaltzustand übergeht Die Luftfedern 2b bis 2d können auf entsprechende Art und Weise mit Druckluft aus dem Druckluftspeicher 4 befüllt werden (hierbei ist auch ein gleichzeitiges Auffüllen von mehreren Luftfedern 2a bis 2d möglich).

Im Folgenden wird anhand der Luftfeder 2a beispielhaft erläutert, wie Druckluft aus den Luftfedern 2a bis 2d über den Kompressor 6 in den Druckluftspeicher 4 überführt werden kann: Zunächst werden von der Steuereinheit der Niveauregelanlage die elektrisch steuerbaren Wegeventile 14, 18 und 24a angesteuert, so dass diese von dem in der Figur 1 gezeigten ersten Schaltzustand in den zweiten Schaltzustand übergehen. Danach wird von der Steuereinheit der Kompressor 6 angesteuert, so dass dieser beginnt zu laufen. Aus der Luftfeder 2a wird dann Druckluft über das Wegeventil 24a, das Wegeventil 14, den Kompressor 6 und das Wegeventil 18 in den Druckluftspeicher 4 überführt. Wenn genügend Druckluft aus der Luftfeder 2a in den Druckluftspeicher 4 abgelassen worden ist (wenn der Fahrzeugaufbau im Bereich der Luftfeder 2a also das gewünschte Niveau eingenommen hat), wird von der Steuereinheit der Kompressor 6 angesteuert, so dass dieser aufhört zu laufen. Darüber hinaus werden die steuerbaren Wegeventile 14, 18 und 24a nicht mehr bestromt, so dass diese wieder in den ersten Schaltzustand übergehen. Auf entsprechende Art und Weise können die Luftfedern 2b bis 2d in den Druckluftspeicher 4 entleert werden (hierbei ist auch ein gleichzeitiges Entleeren von mehreren Luftfedern 2a bis 2d möglich).

Wenn der Druckluftspeicher 4 mit Druckluft aus der Atmosphäre aufgefüllt werden soll, werden von der Steuereinheit der Niveauregelanlage zunächst die steuerbaren Wegeventile 34 und 18 angesteuert, so dass diese von dem in der Figur 1 gezeigten ersten Schaltzustand in den zweiten Schaltzustand übergehen. Danach wird der Kompressor angesteuert, so dass dieser beginnt zu laufen. Aus der Atmosphäre wird dann über das Wegeventil 34, den Kompressor 6 und das Wegeventil 18 Luft in den Druckluftspeicher 4 überführt. Soll keine Luft mehr aus der Atmosphäre in den Druckluftspeicher 4 überführt werden, so werden die steuerbaren Wegeventile 34 und 18 von der Steuereinheit nicht mehr bestromt, so dass diese wieder in den ersten Schaltzustand übergehen. Darüber hinaus wird der Kompressor 6 nicht mehr angesteuert, so dass dieser aufhört zu laufen.

Zum Ablassen von Druckluft aus dem Druckluftspeicher 4 wird von der Steuereinheit der Niveauregelanlage das steuerbare Wegeventil 34 angesteuert, so dass dieses von dem in der Figur 1 gezeigten ersten Grundzustand in den zweiten Schaltzustand übergeht. Der Druckluftspeicher 4 kann dann über die Wegeventile 14 und 34 in die Atmosphäre entleert werden. Soll der Druckluftspeicher 4 nicht weiter entleert werden, so wird das steuerbare Wegeventil 34 von der Steuereinheit der Niveauregelanlage nicht weiter bestromt, so dass es wieder in den ersten gezeigten Schaltzustand übergeht.

Im Folgenden wird erläutert, wie die Luftmenge L in den Luftfedern 2a bis 2d und in dem Druckluftspeicher 4 bestimmt wird:

$$L_i = p_i V_i;\ i = 1 \text{ bis } 4$$

$$L_s = p_s V_s$$

mit:

$L_i$ = Luftmenge in den Luftfedern 2a bis 2d
$p_i$ = Druck in den Luftfedern 2a bis 2d
$V_i$ = Volumen der Luftfedern 2a bis 2d
$L_s$ = Luftmenge im Druckluftspeicher 4
$p_s$ = Druck im Druckluftspeicher 4
$V_s$ = Volumen des Druckluftspeichers 4.

Anhand der Luftfeder 2a wird erläutert, wie mit dem Drucksensor der Druck $p_i$ in den Luftfedern 2a - 2d bestimmt werden kann: Zunächst wird von der Steuereinheit das steuerbare Wegeventil 18 angesteuert, so dass es von dem in der Figur 1 gezeigten ersten Schaltzustand in den zweiten Schaltzustand übergeht. Die Luftfedern 2a bis 2d sind dann von dem Kompressor 6 und dem Druckluftspeicher 4 vollständig getrennt. Danach wird von der Steuereinheit der Niveauregelanlage das steuerbare Wegeventil 24a angesteuert, so dass dieses von dem in der Figur 1 gezeigten ersten Schaltzustand in den zweiten Schaltzustand übergeht. An dem Drucksensor 30 liegt dann der Druck in der Luftfeder 2a an, so dass er gemessen und an die Steuereinheit der Niveauregelanlage weitergegeben werden kann. Soll der Druck nicht weiter gemessen werden, so werden die Wegeventile 18 und 24a von der Steuereinheit nicht mehr bestromt, so dass dieses wieder in den in der Figur 1 gezeigten ersten Schaltzustand übergehen. Entsprechend kann der Druck in den Luftfedern 2b bis 2d gemessen werden.

Zur Bestimmung des Volumens $V_1$ in der Luftfeder 2a wird mit dem in der Luftfeder 2a zugeordneten (nicht gezeigten) Höhensensor der Einfederungszustand der Luftfeder 2a gemessen und an die Steuereinheit der Niveauregelanlage weitergegeben. In der Steuereinheit ist hinterlegt, welches Volumen der Luftfeder 2a zu dem momentanen Einfederungszustand dieser gehört, so dass aus dem übermittelten Signal des Höhensensors das Volumen der Luftfeder 2a bestimmt werden kann. Auf entsprechende Art und Weise wird das Volumen der Luftfedern 2b bis 2d festgestellt.

Zur Bestimmung des Druckes in dem Druckluftspeicher 4 nehmen die steuerbaren Wegeventile 14 und 18 zunächst den in der Figur 1 gezeigten ersten Schaltzustand ein. Der Druckluftspeicher 4 ist dann über diese mit dem Drucksensor 30 verbunden, so dass dann ein Druckausgleich zwischen dem Druckluftspeicher 4 und dem Drucksensor 30 stattfindet, wenn der Druck in dem Druckluftspeicher 4 größer ist als an dem Drucksensor 30. Danach werden die steuerbaren Wegeventile 14 und 18 von dem ersten gezeigten Schaltzustand in den zweiten Schaltzustand überführt. Der Drucksensor 30 ist dann über das steuerbare Wegeventil 14, den Kompressor 6 und das steuerbare Wegeventil 18 mit dem Druckluftspeicher 4 verbunden, so dass ein Druckausgleich zwischen dem Drucksensor 30 und dem Druckluftbehälter 4 stattfindet, wenn der Druck am Drucksensor 30 größer ist als in dem Druckluftbehälter 4. Wenn die Wegeventile 14 und 18 vor der Druckmessung also in beide Schaltzustände überführt werden, liegt am Drucksensor 30 auf jeden Fall der statische Luftdruck im Druckluftspeicher 4 an und ist somit durch diesen messbar. Der von dem Drucksensor 30 gemessene Druck wird an die Steuereinheit der Niveauregelanlage weitergegeben.

Das Volumen $V_s$ des Druckluftspeichers 4 ist in der Steuereinheit der Niveauregelanlage gespeichert, so dass nunmehr alle zur Berechnung der Luftmenge L notwendigen Größen in der Steuereinheit der Niveauregelanlage vorliegen.

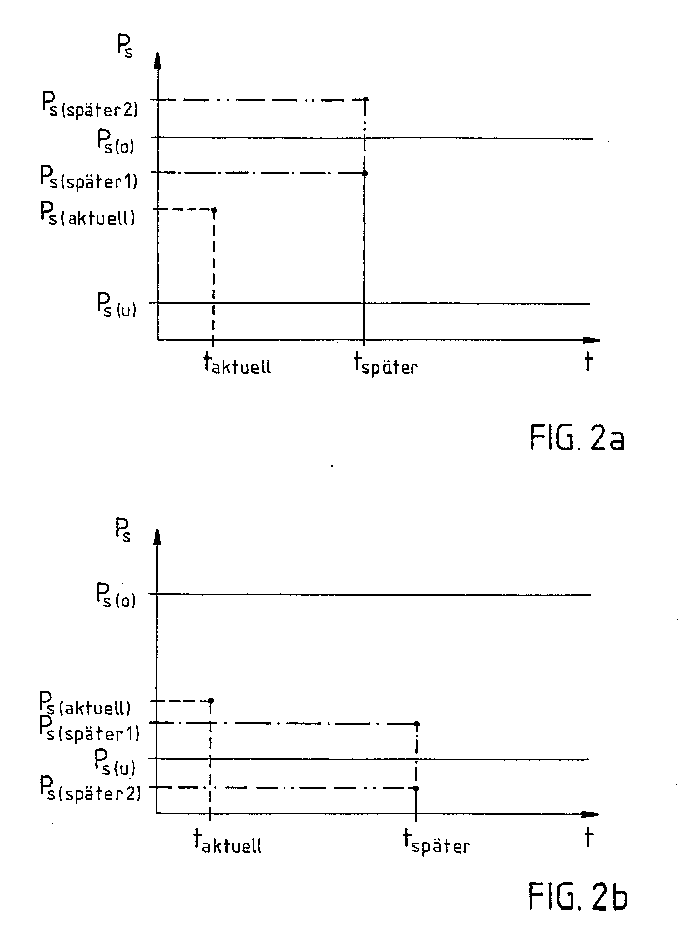

Figur 2a zeigt ein Diagramm, in dem der Speicherdruck $p_s$ über der Zeit t aufgetragen ist. Im Zusammenhang mit der Figur 2a wird im Folgenden erläutert, wie der Speicherdruck des Druckluftspeichers 4 der Niveauregelanlage (s. Figur 1) geregelt wird, wenn der Fahrzeugaufbau des Kraftfahrzeuges abgesenkt werden soll. Zunächst wird der aktuelle Speicherdruck

$$p_{s\ aktuell}$$

zum aktuellen Zeitpunkt $t_{aktuell}$ bestimmt, wobei die Bestimmung so erfolgt, wie es im Zusammenhang mit der Figur 1 für den Speicherdruck erläutert worden ist. Wenn der aktuelle Speicherdruck bestimmt ist, wird ein Niveau vorgegeben, auf das ausgehend vom aktuellen Niveau der Fahrzeugaufbau des Kraftfahrzeuges abgesenkt werden soll. Dies wird beispielhaft für den Fall erläutert, dass der Fahrzeugaufbau des Kraftfahrzeuges im Bereich der Luftfeder 2a (s. Figur 1) abgesenkt werden soll. In diesem Fall müsste aus der Luftfeder 2a Druckluft in den Druckluftspeicher 4 (s. Figur 1) überführt werden. Die Luftmenge, die zur Absenkung des Fahrzeugaufbaus des Kraftfahrzeuges im Bereich der Luftfeder 2a aus dieser abgelassen werden müsste, berechnet sich wie folgt:

$$L_{ab} = p_1 V_1 \text{ (Niveau 1)} - p_1 V_1 \text{ (Niveau 2)}$$

mit:

$L_{ab}$: Luftmenge, die aus der Luftfeder 2a abgelassen werden muss, um den Fahrzeugaufbau abzusenken
$p_1 V_1$ (Niveau 1): Luftmenge in der Luftfeder 2a vor dem Ablassvorgang
$p_1 V_l$ (Niveau 2): Luftmenge inder Luftfeder 2a nach dem Ablassvorgang.

Die Luftmenge in der Luftfeder 2a vor dem Ablassvorgang wird berechnet, wie es im Zusammenhang mit der Figur 1 bereits erläutert worden ist. Die Luftmenge in der Luftfeder 2a, die nach dem Ablass vorliegen würde, kann ausgehend von der Luftmenge vor dem Ablassvorgang - z.B. über Kennfelder - bestimmt werden. Die Luftmenge $L_{ab}$ müsste aus der Luftfeder 2a in den Druckluftspeicher 4 überführt werden, um den Fahrzeugaufbau im Bereich der Luftfeder 2a abzusenken. Hierdurch würde sich die Luftmenge in dem Druckluftspeicher 4 vergrößern, wodurch der Speicherdruck ansteigen würde. Der Speicherdruck, der in dem Druckluftspeicher 4 vorliegen würde, nachdem die Luftmenge $L_{ab}$ in diesen überführt worden ist, berechnet sich folgt:

$$p_{s \text{ (später)}} = p_{s \text{ (aktuell)}} + L_{ab}/V_s$$

mit:

$p_{s \text{ (später)}}$:  späterer Speicherdruck, der in dem Druckluftspeicher 4 vorliegen würde, nachdem in diesen die Luftmenge $L_{ab}$ überführt worden ist.
$p_{s \text{ (aktuell)}}$:  Speicherdruck in dem Druckluftspeicher 4 vor dem Ablassen von Druckluft aus der Luftfeder 2a
$L_{ab}$:  s. oben
$V_s$:  Volumen des Druckluftspeichers 4.

Der Speicherdruck $p_{s \text{ (später)}}$ gibt an, wie der Speicherdruck im Druckluftspeicher 4 wäre, wenn die Regelung an der Luftfeder 2a vorgenommen würde und die Luftmenge $L_{ab}$ von der Luftfeder 2a in den Druckluftspeicher 4 überführt würde. Nachdem der Speicherdruck $p_{s \text{ (später)}}$ wie erläutert berechnet worden ist, wird überprüft, ob dieser Speicherdruck oberhalb eines oberen Grenzwertes $p_s$ (o) für den Speicherdruck in dem Druckluftspeicher 4 liegen würde. Wenn der berechnete spätere Speicherdruck kleiner oder gleich dem oberen Grenzwert ist (so wie es z.B. für den Speicherdruck $p_{s \text{ (später 1)}}$ in der Figur 2a der Fall ist), so wird der Regelvorgang an der Luftfeder 2a unmittelbar vorgenommen, und die Luftmenge $L_{ab}$ von der Luftfeder 2a in den Druckluftspeicher 4 überführt.

Falls jedoch der so berechnete Speicherdruck $p_{s \text{ (später)}}$ größer ist als der obere Grenzwert (so wie z.B. für den in der Figur 2a gezeigten Speicherdruck $p_{s \text{ (später 2)}}$ der Fall ist), so wird vor dem Regelvorgang an der Luftfeder 2a Druckluft aus dem Druckluftspeicher 4 in die Atmosphäre abgelassen. Hierbei wird soviel Druckluft aus dem Druckluftspeicher 4 abgelassen, dass nach dem Ablassvorgang sichergestellt ist, dass der spätere Speicherdruck (also der Speicherdruck nach dem tatsächlichen Regelvorgang an der Luftfeder 2a) der oberen Grenze $p_s$ (o) entspricht oder zwischen der oberen Grenze $p_s$ (o) und der unteren Grenze $p_s$ (u) für den Speicherdruck liegt Um dies zu erreichen, ist mindestens die folgende Luftmenge aus dem Druckluftspeicher 4 in die Atmosphäre abzulassen:

$$L_{ab \text{ (Speicher)}} \geq (p_{s \text{ (später)}} - p_s \text{ (o)}) V_s$$

mit:

6

$L_{ab\ (Speicher)}$: Luftmenge, die aus dem Druckluftspeicher 4 in die Atmosphäre abzulassen ist.

Die abzulassene Luftmenge $L_{ab\ (Speicher)}$ kann z.B. mit einem Luftmengenmesser erfasst werden. Es ist ebenfalls möglich, während des Ablassens von Druckluft aus dem Druckluftspeicher 4 regelmäßig den Speicherdruck im Druckluftspeicher 4 zu überwachen, und solange Druckluft aus dem Druckluftspeicher 4 abzulassen, bis der Speicherdruck kleiner oder gleich $p_s$ (o) ist.

Nachdem eine entsprechende Luftmenge $L_{ab\ (Speicher)}$ aus dem Druckluftspeicher 4 in die Atmosphäre abgelassen worden ist, kann der gewünschte Regelvorgang an der Luftfeder 2a vorgenommen werden, ohne dass der Speicherdruck während des Regelvorganges in dem Druckluftspeicher 4 über die obere Grenze $p_s$ (o) steigt.

Figur 2b zeigt ein Diagramm, in dem der Speicherdruck $p_s$ in dem Druckluftspeicher 4 ebenfalls über der Zeit t aufgetragen ist. Im Zusammenhang mit der Figur 2b wird im Folgenden erläutert, wie der Speicherdruck in dem Druckluftspeicher 4 geregelt wird, wenn der Fahrzeugaufbau des Kraftfahrzeuges angehoben werden soll. Hierbei wird wieder beispielhaft davon ausgegangen, dass der Fahrzeugaufbau im Bereich der Luftfeder 2a angehoben werden soll. Zunächst wird wiederum der aktuelle Speicherdruck $p_s$ aktuell bestimmt. Zusätzlich wird das Niveau vorgegeben, auf das der Fahrzeugaufbau des Kraftfahrzeuges im Bereich der Luftfeder 2a ausgehend von dem aktuellen Niveau im Bereich der Luftfeder 2a angehoben werden soll. Zur Anhebung des Fahrzeugaufbaus im Bereich der Luftfeder 2a müsste eine bestimmte Luftmenge aus dem Druckluftspeicher 4 in die Luftfeder 2a überführt werden, die sich wie folgt berechnet:

$$L_{ab\ (Speicher)} = p_1 V_1 (\text{Niveau 2}) - p_1 V_1 (\text{Niveau 1})$$

mit:

$L_{ab\ (speicher)}$: Luftmenge, die aus dem Druckluftspeicher 4 in die Luftfeder 2a abzulassen ist
$p_1 V_1$ (Niveau 2): Luftmenge in der Luftfeder 2a, nachdem der Fahrzeugaufbau angehoben ist,
$p_1 V_1$ (Niveau 1): Luftmenge in der Luftfeder 2a vor dem Regelvorgang.

Durch das Ablassen der Luftmenge aus dem Druckluftspeicher 4 würde sich der Speicherdruck in dem Druckluftspeicher 4 im Falle eines Regelvorganges wie folgt verändern:

$$p_{s\ später} = p_{s\ aktuell} - L_{ab\ (Speicher)}/V_s$$

wobei $p_{s\ später}$ den späteren Speicherdruck in dem Druckluftspeicher 4 nach dem Regelvorgang bezeichnet. Wenn die Berechnung des späteren Speicherdruckes ergibt, dass dieser größer oder gleich einem unteren Grenzwert $p_s$ (u) für den Speicherdruck wäre, so wird der Regelvorgang direkt vorgenommen (dies ist z.B. der Fall für den in der Figur 2b eingezeichneten späteren Speicherdruck $p_{s\ (später\ 1)}$). Falls hingegen der spätere Speicherdruck kleiner als der untere Grenzwert $p_s$ (u) wäre (so wie dies z.B für $p_{s\ später\ 2}$ in der Figur 2b der Fall ist), so wird der Regelvorgang zunächst nicht vorgenommen. In diesem Fall wird vielmehr der Druckluftspeicher 4 zunächst mit einer Luftmenge aus der Atmosphäre derart aufgefüllt, dass nach dem Auffüllvorgang der spätere Speicherdruck in dem Druckluftspeicher 4 größer oder gleich dem unteren Grenzwert ist Dies bedeutet, dass zumindest die folgende Luftmenge aus der Atmosphäre in den Druckluftspeicher aufgefüllt würde:

$$L_{auf\ (Speicher)} = (p_s\ (u) - p_{s\ später}) V_s$$

wobei $L_{auf\ (Speicher)}$ der auszufüllenden Luftmenge entspricht. Nach dem Auffüllen der entsprechenden Luftmenge ist sichergestellt, dass nach dem Regelvorgang der Speicherdruck in dem Druckluftspeicher 4 größer oder gleich dem unteren Grenzwert $p_s$ (u) ist, so dass nach dem Auffüllen von Druckluft in den Druckluftspeicher 4 der Regelvorgang tatsächlich vorgenommen werden kann.

Bei der Regelung des Speicherdruckes in der oben genannten Art und Weise kann ein fiktives Niveau angegeben werden, auf das der Fahrzeugaufbau des Kraftfahrzeuges aus dem aktuellen Niveau heraus angehoben oder abgesenkt werden kann. Bei diesem fiktiven Niveau kann es sich beispielsweise um ein Niveau handeln, bei dem sich das Kraftfahrzeug in einem fahrdynamisch sicheren Niveau befindet. Befindet sich das aktuelle Niveau des Fahrzeugaufbaus unterhalb des vorgegebenen fiktiven Niveaus, so wird der Speicherdruck geregelt, wie es im Zusammenhang mit der Figur 2a beschrieben worden ist, wobei in diesem Fall das dort erwähnte Niveau 2 dem fiktiven Niveau entspricht. Die entsprechende Regelung des Speicherdruckes kann in regelmäßigen Zeitabständen stattfinden. Wenn die Zeitabstände kurz genug gewählt werden (z.B. alle 10 bis 120 Sekunden), ist jederzeit sichergestellt, dass mit Hilfe der Nvieauregelanlage ein Anheben des Fahrzeugaufbaus in den sicheren Fahrzustand theoretisch möglich ist. Entsprechendes gilt für den Fall, dass das aktuelle Niveau des Fahrzeugaufbaus des Kraftfahrzeuges oberhalb des vorgegebenen fiktiven Niveaus liegt. In diesem Fall findet eine Regelung statt, wie es im Zusammenhang mit der Figur 2b beschrieben worden ist, wobei wiederum das dort erwähnte Niveau 2 dem fiktiven Niveau entspricht. Ein tatsächliches Anheben oder Absenken des Fahrzeugaufbaus findet in diesem Fall nur dann statt, wenn aufgrund einer bestimmten Fahrsituation des Kraftfahrzeuges mit der Niveauregelanlage (z.B. aufgrund einer hohen Geschwindigkeit) das fahrdynamisch sichere Niveau notwendig ist.

Es ist ebenfalls möglich, zur Regelung des Speicherdruckes ein Niveau vorzugeben, auf das der Fahrzeugaufbau des Kraftfahrzeuges ausgehend von dem aktuellen Niveau tatsächlich angehoben oder abgesenkt werden soll.

**Bezugzeichenliste**

(Teil der Beschreibung)

| 2a, ..., 2d | Luftfeder |
| 4 | Druckluftspeicher |
| 6 | Kompressor |
| 8 | Eingang des Kompressors |
| 10 | Ausgang des Kompressors |
| 14 | steuerbares Wegeventil |
| 18 | steuerbares Wegeventil |
| 24a, ..., 24d | steuerbare Wegeventile |
| 30 | Drucksensor |
| 34 | steuerbares Wegeventil |

**Patentansprüche**

1.   Geschlossene Niveauregelanlage für ein Kraftfahrzeug, mit der das aktuelle Niveau des Kraftfahrzeuges angehoben und abgesenkt werden kann und das die folgenden Bestandteile enthält:

- einen Kompressor (6)
- einen Druckluftspeicher (4), der mit Luft aus der Atmosphäre befüllbar und der in die Atmosphäre entleerbar ist
- mindestens eine Luftfeder (2a - 2d), wobei die Luftfeder (2a - 2d) über den Kompressor (6) mit dem Druckluftspeicher (4) derart in Verbindung steht, dass Druckluft aus der Luftfeder (2a - 2d) in den Druckluftspeicher (4) und in die umgekehrte Richtung überführbar ist,

**dadurch gekennzeichnet, dass**
der Speicherdruck wie folgt geregelt wird:

- Bestimmung des aktuellen Speicherdruckes

- Vorgabe mindestens eines Niveaus, auf das das Kraftfahrzeug angehoben oder abgesenkt werden kann
- Bestimmung der Luftmenge, die benötigt wird, um das Kraftfahrzeug aus dem aktuellen Niveau in das vorgegebene Niveau anzuheben oder abzusenken
- Bestimmung des späteren Speicherdruckes, um den der aktuelle Speicherdruck absinken würde, wenn das Kraftfahrzeug aus dem aktuellen Niveau in das vorgegebene Niveau angehoben würde bzw. Bestimmung des späteren Speicherdruckes, auf den der aktuelle Speicherdruck ansteigen würde, wenn das Kraftfahrzeug aus dem aktuellen Niveau in das vorgegebene Niveau abgesenkt würde
- Auffüllen des Druckluftspeichers (4) mit Druckluft aus der Atmosphäre, wenn der spätere Speicherdruck unter einem unteren Grenzwert liegen würde und Entleeren des Druckluftspeichers (4) in die Atmosphäre, wenn der spätere Speicherdruck über einem oberen Grenzwert liegen würde.

2. Geschlossene Niveauregelanlage nach Anspruch 1, **dadurch gekennzeichnet, dass** zur Regelung des Speicherdruckes ein Niveau vorgegeben wird, auf das das Kraftfahrzeug nach der Vorgabe, ausgehend vom aktuellen Niveau, tatsächlich angehoben oder abgesenkt werden soll.

3. Geschlossene Niveauregelanlage nach Anspruch 1, **dadurch gekennzeichnet, dass** zur Regelung des Speicherdruckes mindestens ein fiktives Niveau vorgegeben wird, auf das das Kraftfahrzeug ausgehend vom aktuellen Niveau theoretisch angehoben oder abgesenkt werden kann.

4. Geschlossene Niveauregelanlage nach Anspruch 3, **dadurch gekennzeichnet, dass** die Luftmenge, die notwendig ist, um das Kraftfahrzeug auf das fiktive Niveau anzuheben bzw. abzusenken, bei eingeschalteter Zündung in bestimmten zeitlichen Abständen berechnet wird.

5. Geschlossene Niveauregelanlage nach einem der Ansprüche 3 bis 4, **dadurch gekennzeichnet, dass** als fiktives Niveau mindestens ein Niveau vorgegeben wird, in dem sich das Kraftfahrzeug in einem fahrdynamisch sicheren Zustand befindet.

6. Geschlossene Niveauregelanlage nach einem der Ansprüche 1 bis 5, **dadurch gekennzeichnet, dass**, wenn der spätere Speicherdruck unter dem unteren Grenzwert liegen würde, vor einem Regelvorgang mindestens soviel Druckluft in den Druckluftspeicher (4) gefüllt wird, dass der Speicherdruck nach dem Regelvorgang zumindest dem unteren Grenzwert entspricht, bzw., wenn der spätere Speicherdruck über dem oberen Grenzwert liegen würde, mindestens soviel Druckluft aus dem Druckluftspeicher (4) abgelassen wird, dass der Speicherdruck nach dem Regelvorgang zumindest dem oberen Grenzwert entspricht.

7. Geschlossene Niveauregelanlage nach einem der Ansprüche 1 bis 6, **dadurch gekennzeichnet, dass** der obere Grenzwert anhand des maximal zulässigen Kompressorstromes und/ oder der gewünschten maximalen Verstellgeschwindigkeit der Niveaulagen bestimmt wird.

8. Geschlossene Niveauregelanlage nach einem der Ansprüche 1 bis 7, **dadurch gekennzeichnet, dass** der untere Grenzwert anhand des maximal zulässigen Kompressorstromes und/ oder der gewünschten minimalen Verstellgeschwindigkeit der Niveaulagen bestimmt wird.

**Claims**

1. Self-contained ride level control system for a motor vehicle, with which the current ride level of the motor vehicle can be raised and lowered and which contains the following components:

- a compressor (6),
- a compressed air accumulator (4) which can be filled with air from the atmosphere and which can be emptied into the atmosphere,
- at least one air spring (2a - 2d), the air spring (2a - 2d) being connected to the compressed air accumulator (4) via the compressor (6) in such a way that compressed air can be transferred into the compressed air accumulator (4) from the air spring (2a - 2d), and in the opposite direction,

**characterized in that** the accumulator pressure is controlled as follows:

- the current accumulator pressure is determined,

- at least one ride level to which the motor vehicle can be raised or lowered is predefined,
- the quantity of air which is required to raise or lower the motor vehicle from the current ride level to the predefined ride level is determined,
- the later accumulator pressure by which the current accumulator pressure would be lowered if the motor vehicle were to be raised from the current ride level to the predefined ride level is determined or the later accumulator pressure to which the current accumulator pressure would rise if the motor vehicle were lowered from the current ride level into the predefined ride level is determined,
- the compressed air accumulator (4) is filled with compressed air from the atmosphere if the later accumulator pressure would be below a lower limiting value, and the compressed air accumulator (4) is emptied into the atmosphere if the later accumulator pressure would be above an upper limiting value.

2. Self-contained ride level control system according to Claim 1, **characterized in that** a ride level to which the motor vehicle is to be actually raised or lowered in accordance with the predefined value starting from the current ride level is predefined in order to control the accumulator pressure.

3. Self-contained ride level control system according to Claim 1, **characterized in that** at least one virtual ride level to which the motor vehicle can theoretically be raised or lowered starting from the current ride level is predefined in order to control the accumulator pressure.

4. Self-contained ride level control system according to Claim 3, **characterized in that** the quantity of air which is necessary to raise or lower the motor vehicle to the virtual ride level is calculated at specific time intervals with the ignition switched on.

5. Self-contained ride level control system according to one of Claims 3 to 4, **characterized in that** at least one ride level at which the motor vehicle is in a safe state in terms of vehicle movement dynamics is predefined as a virtual ride level.

6. Self-contained ride level control system according to one of Claims 1 to 5, **characterized in that** if the later accumulator pressure were to be below the lower limiting value, before a control process compressed air is input into the compressed air accumulator (4) at least to such an extent that the accumulator pressure after the control process corresponds at least to the lower limiting value, or if the later accumulator pressure were to be above the upper limiting value, compressed air is let out of the compressed air accumulator (4) at least to such an extent that the accumulator pressure after the control process corresponds at least to the upper limiting value.

7. Self-contained ride level control system according to one of Claims 1 to 6, **characterized in that** the upper limiting value is determined by reference to the maximum admissible compressor current and/or the desired maximum adjustment speed of the ride level positions.

8. Self-contained ride level control system according to one of Claims 1 to 7, **characterized in that** the lower limiting value is determined by reference to the maximum admissible compressor current and/or the desired minimum adjustment speed of the ride level positions.

**Revendications**

1. Installation de régulation de niveau fermée destinée à un véhicule automobile, avec laquelle on peut relever et abaisser le niveau actuel du véhicule automobile et qui comprend les composants suivants :

- un compresseur (6),
- un réservoir d'air comprimé (4), qui peut être rempli d'air provenant de l'atmosphère et qui peut être vidé dans l'atmosphère,
- au moins un amortisseur pneumatique (2a - 2d), dans lequel l'amortisseur pneumatique (2a - 2d) est en communication avec le réservoir d'air comprimé (4) par l'intermédiaire du compresseur (6), de telle manière que de l'air comprimé puisse être transmis de l'amortisseur pneumatique (2a - 2d) dans le réservoir d'air comprimé (4) et dans le sens inverse,

**caractérisée en ce que**

la pression du réservoir est régulée de la façon suivante :

- détermination de la pression actuelle du réservoir,
- prédétermination d'au moins un niveau, auquel le véhicule automobile peut être soulevé ou abaissé,
- détermination de la quantité d'air qui est nécessaire pour soulever ou abaisser le véhicule automobile au niveau prédéterminé à partir du niveau actuel,
- détermination de la pression ultérieure du réservoir à laquelle la pression actuelle du réservoir baisserait si le véhicule automobile était soulevé au niveau prédéterminé à partir du niveau actuel ou détermination de la pression ultérieure du réservoir à laquelle la pression actuelle du réservoir augmenterait, si le véhicule automobile était abaissé au niveau prédéterminé à partir du niveau actuel,
- remplissage du réservoir d'air comprimé (4) avec de l'air comprimé provenant de l'atmosphère, si la pression ultérieure du réservoir se situait en dessous d'une valeur limite inférieure et vidange du réservoir d'air comprimé (4) dans l'atmosphère si la pression ultérieure du réservoir se situait au-dessus d'une valeur limite supérieure.

2. Installation de régulation de niveau fermée selon la revendication 1, **caractérisée en ce que** l'on prédétermine, pour la régulation de la pression du réservoir, un niveau auquel le véhicule automobile doit être effectivement soulevé ou abaissé, selon la prédétermination, à partir du niveau actuel.

3. Installation de régulation de niveau fermée selon la revendication 1, **caractérisée en ce que** l'on prédétermine, pour la régulation de la pression du réservoir, au moins un niveau fictif, auquel le véhicule automobile peut théoriquement être soulevé ou abaissé à partir du niveau actuel.

4. Installation de régulation de niveau fermée selon la revendication 3, **caractérisée en ce que** l'on calcule à des intervalles de temps déterminés, avec l'allumage activé, la quantité d'air qui est nécessaire pour soulever ou abaisser le véhicule automobile au niveau fictif.

5. Installation de régulation de niveau fermée selon l'une quelconque des revendications 3 à 4, **caractérisée en ce que** l'on prédétermine comme niveau fictif au moins un niveau, pour lequel le véhicule automobile se trouve dans une situation dynamique de roulage sûre.

6. Installation de régulation de niveau fermée selon l'une quelconque des revendications 1 à 5, **caractérisée en ce que**, si la pression ultérieure du réservoir se situait en dessous de la valeur limite inférieure, on remplit le réservoir d'air comprimé (4), avant une opération de régulation, au moins avec une quantité d'air comprimé telle que la pression du réservoir après l'opération de régulation corresponde au moins à la valeur limite inférieure, ou, si la pression ultérieure du réservoir se situait au-dessus de la valeur limite supérieure, on laisse s'échapper du réservoir d'air comprimé (4) au moins une quantité d'air comprimé telle que la pression du réservoir après l'opération de régulation corresponde au moins à la valeur limite supérieure.

7. Installation de régulation de niveau fermée selon l'une quelconque des revendications 1 à 6, **caractérisée en ce que** l'on détermine la valeur limite supérieure à l'aide du courant maximum autorisé du compresseur et/ou de la vitesse maximale souhaitée de déplacement des positions du niveau.

8. Installation de régulation de niveau fermée selon l'une quelconque des revendications 1 à 7, **caractérisée en ce que** l'on détermine la valeur limite inférieure à l'aide du courant maximum autorisé du compresseur et/ou de la vitesse minimale souhaitée de déplacement des positions du niveau.

## FIG. 1

FIG. 2a

FIG. 2b

**IN DER BESCHREIBUNG AUFGEFÜHRTE DOKUMENTE**

**In der Beschreibung aufgeführte Patentdokumente**

- DE 10122567 C1
- EP 0945288 A2

- DE 19959556 C2